# EUROPÄISCHE PATENTSCHRIFT

(11) **EP 1 240 530 B1**
(45) Veröffentlichungstag und Bekanntmachung des Hinweises auf die Patenterteilung: **27.08.2008**
(21) Anmeldenummer: 00988609.4
(22) Anmeldetag: 11.11.2000
(51) Int. Cl.: G01P 15/125

(54) **MIKROMECHANISCHE STRUKTUR, INSBESONDERE FÜR EINEN BESCHLEUNIGUNGSSENSOR**
MICROMECHANICAL STRUCTURE, IN PARTICULAR FOR AN ACCELERATION SENSOR
STRUCTURE MICROMECANIQUE, NOTAMMENT POUR UN CAPTEUR D'ACCELERATION

(30) Priorität: 10.12.1999 DE 19959707
(43) Veröffentlichungstag der Anmeldung: 18.09.2002
(73) Patentinhaber: ROBERT BOSCH GMBH, 70442 Stuttgart (DE)
(72) Erfinder: KIPP, Andreas, 72762 Reutlingen (DE); GOETZ, Siegbert, 70839 Gerlingen (DE); LUTZ, Markus, Sunnyvale, CA 94086 (US)
(86) Internationale Anmeldenummer: PCT/DE2000/004015
(87) Internationale Veröffentlichungsnummer: WO 2001/042797

(56) Entgegenhaltungen:
- DE-A- 19 808 549
- US-A- 5 565 625

## Beschreibung

### STAND DER TECHNIK

Die vorliegende Erfindung betrifft eine mikromechanische Struktur, insbesondere für einen Beschleunigungssensor, mit einem Substrat, welches eine Verankerungseinrichtung aufweist, und einer Schwungmasse, die über eine Biegefedereinrichtung mit der Verankerungseinrichtung verbunden ist, so daß die Schwungmasse elastisch aus ihrer Ruhelage auslenkbar ist.

Obwohl auf beliebige mikromechanische Strukturen anwendbar, werden die vorliegende Erfindung und die ihr zugrundeliegende Problematik in bezug auf einen mikromechanischen Beschleunigungssensor erläutert.

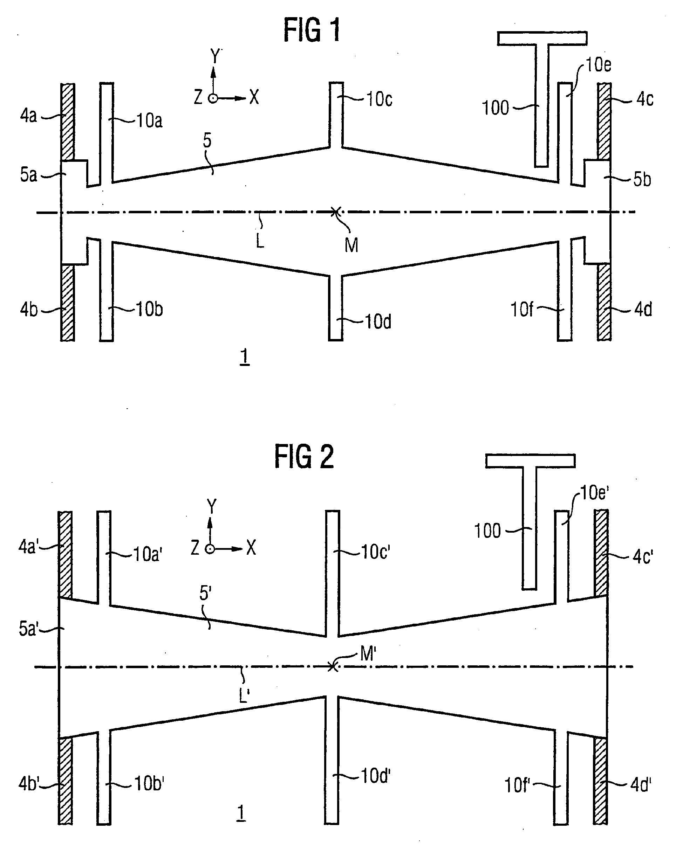

Fig. 2 zeigt eine schematische Draufsicht auf eine bekannte mikromechanische Struktur für einen Beschleunigungssensor, wie aus der DE 198 08 549 A1 bekannt. Solch eine Struktur wird beispielsweise als Sensierelement eines Drehratensensors verwendet.

In Fig. 2 bezeichnen 5' eine Schwungmasse, welche eine konische Längsform mit einer Längsachse L' aufweist. M' ist dabei der Längsmittelpunkt. Die Schwungmasse 5' ist über eine (nicht gezeigte) Verankerungseinrichtung und Biegefedern 4a' bis d' elastisch über dem Substrat 1 aufgehängt, so dass die Schwungmasse 5' elastisch aus ihrer Ruhelage auslenkbar ist, also ein Linearschwinger ist. 10a'-f' sind zusammen mit der Schwungmasse 5' bewegliche Elektroden, und 100 eine fest im Substrat 1 verankerte Elektrode. Selbstverständlich ist jeder bewegliche Elektrode 10a'-f' eine solche feste Elektrode zugeordnet, doch zur Vereinfachung ist nur die feste Elektrode 100 gezeichnet.

Solche mikromechanischen Beschleunigungssensoren sind also als Feder - Masse - System ausgelegt. Allgemein bestehen die Schwungmasse 5', Federn 4a' bis d' und Elektroden 10a' bis f' aus Epitaxie - Polysilizium, welches durch Entfernung einer Opferschicht aus SiO₂ zwischen dem Epitaxie - Polysilizium und dem Substrat frei schwebend gemacht worden ist.

Die Detektion der Beschleunigung erfolgt kapazitiv durch einen entsprechenden Kondensator, welcher als Kondensatorplatten die beweglichen Elektroden 10a' bis f' aufweist, die an der Schwungmasse 5' befestigt sind, sowie die feststehenden Elektroden 100, die auf dem Substrat 1 verankert sind. Die an der Schwungmasse 5' befestigten Elektroden 10a' bis f' besitzen im übrigen abgestufte Längen mit unterschiedlichen Eigenfrequenzen. Grund hierfür ist, dass die Eigenfrequenzen der Elektroden 10a' bis f' das Übertragungsverhalten des Beschleunigungssensors nicht stören sollen.

Bekannte Formen der Schwungmasse 5' sind Rechtecke und die in Fig. 2 gezeigte konische Form. Als nachteilig bei dem bekannten Ansatz nach Fig. 2 hat sich die Tatsache herausgestellt, dass die Robustheit der Schwungmasse 5' gegenüber orthogonal zur Längsachse L' wirkenden Störeinflüssen zu gering ist. Eine mikromechanische struktur entsprechend dem Obergriff des Anprcuhs 1 ist aus der US-A-5565625 bekannt.

### VORTEILE DER ERFINDUNG

Die der vorliegenden Erfindung zugrundeliegende Idee liegt in einer Reduzierung des Stressgradienten, d.h. der Durchbiegung der Schwungmasse, durch Vorsehen einer konvexen Form der Schwungmasse. Mit anderen Worten wird die Schwungmasse von der Mitte ausgehend zu den Längsenden hin schmaler. An der Verbindung zu den Federn kann optionellerweise eine Verbreiterung vorgesehen sein.

Dadurch ist auch die Querempfindlichkeit, also die Anfälligkeit gegen Querbeschleunigung, reduziert. Der Vorteil von beweglichen Elektroden verschiedener Länge kann beibehalten werden, so dass der Gefahr einer Störeinkopplung, bedingt durch die Eigenfrequenzen der Elektronen, wirksam entgegengewirkt ist. Weiterhin bringt die Erfindung eine Steigerung der Prozess-/ Fertigungssicherheit beim Trenchprozeß, insbesondere beim Flachtrenchprozeß. Gleich-zeitig sind keine Nachteile bzgl. weiterer Parameter vorhanden.

In den abhängigen Ansprüchen finden sich vorteilhafte Weiterbildungen und Verbesserungen der in Anspruch 1 angegebenen mikromechanischen Struktur.

Gemäß einer bevorzugten Weiterbildung sind seitlich an der Schwungmasse Elektroden angebracht, welche zusammen damit beweglich sind.

Gemäß einer weiteren bevorzugten Weiterbildung vergrößert die Länge der Elektroden sich ausgehend von der Längsmitte zu den Längsenden hin.

Gemäß einer weiteren bevorzugten Weiterbildung ist die Länge der Elektroden derart abgestuft, daß der Abstand der von der Schwungmasse abgewandten Enden der Elektroden von der Längsachse konstant ist. Dadurch stören die Eigenfrequenzen der Elektroden das Übertragungsverhalten des Beschleunigungssensors nicht.

Gemäß einer weiteren bevorzugten Weiterbildung verschmälert sich die Schwungmasse ausgehend von der Längsmitte zu den Längsenden hin gleichmäßig.

Gemäß einer weiteren bevorzugten Weiterbildung sind die Verbreiterungen an den Längsenden stufenförmig ausgebildet.

Gemäß einer weiteren bevorzugten Weiterbildung ist die erfindungsgemäße mikromechanische Struktur durch Silizium-Oberflächenmikromechanik oder eine andere Mikromechanik-Technologie herstellbar.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine schematische Draufsicht auf eine Ausführungsform der erfindungsgemäßen mikromechanischen Struktur als Teil eines Beschleunigungssensors; und
- Fig. 2: eine schematische Draufsicht auf eine bekannte mikromechanische Struktur für einen Beschleunigungssensor.

### BESCHREIBUNG DER AUSFÜHRUNGSBEISPIELE

In den Figuren bezeichnen gleiche Bezugszeichen gleiche oder funktionsgleiche Bestandteile.

Fig. 1 zeigt eine schematische Draufsicht auf eine Ausführungsform der erfindungsgemäßen mikromechanischen Struktur als Teil eines Beschleunigungssensors.

In Fig. 1 bezeichnen zusätzlich zu den bereits eingeführten Bezugszeichen 5 eine Schwungmasse, welche eine konvexe Längsform mit einer Längsachse L aufweist. M ist dabei der Längsmittelpunkt. Die Schwungmasse 5 ist über eine (nicht gezeigte) Verankerungseinrichtung und Biegefedern 4a bis d elastisch über dem Substrat 1 aufgehängt, so dass die Schwungmasse 5 um eine senkrecht zur Substratoberfläche liegende Drehachse und um mindestens eine parallel zur Substratoberfläche liegende Drehachse elastisch aus ihrer Ruhelage auslenkbar ist. 10a-f sind zusammen mit der Schwungmasse 5 bewegliche Elektroden, und 100 eine fest im Substrat 1 verankerte Elektrode. Selbstverständlich ist jeder bewegliche Elektrode 10a-f eine solche feste Elektrode zugeordnet, doch zur Vereinfachung ist nur die feste Elektrode 100 gezeichnet.

Die Schwungmasse 5 des Beschleunigungssensors wurde konvex ausgelegt. Damit wird der Beschleunigungssensor hinsicht-Fich Stressgradient und Querempfindlichkeit optimiert. Gleichzeitig werden die abgestuften beweglichen Elektroden-ärmchen beibehalten, um das Übertragungsverhalten des Feder - Masse - Systems nicht zu beeinträchtigen. Die betrachteten Größen sind nämlich ausschlaggebend für eine Kapazitätsänderung bei der Detektion, die nicht von einer zu messenden Drehrate herrührt, sondern von einer pathologischen, geometrisch bedingten Kapazitätsänderung durch Fehlstellung der Elektroden.

Zweckmäßig dabei ist die Verwendung einer Verstärkung 5a, 5b an den Längsenden zur Anbindung an die Federn 4a bis d, damit die konvexe Geometrie voll zur Wirkung kommt. Diese Verstärkung 5a, 5b kann wie im vorliegenden Ausführungsbeispiel durch eine stufenförmige Verbreiterung realisiert sein. Selbstverständlich ist auch eine kontinuierliche Verbreiterung an den Enden möglich.

Die neue Geometrie der Schwungmasse 5 erlaubt außerdem, ohne zusätzliche Beanspruchung von Chipfläche die Verwendung eines dickeren Federbalkens der Federn 4a-d bei gleichzeitiger Verlängerung des Federbalkens, ohne die Resonanzfrequenz zu verändern.

Die Balkenbreite ist der Prozessparameter mit dem größten Einfluss auf die Funktionalität des Beschleunigungssensors. Hier wird das Prozessfenster bei einer Verbreiterung erhöht. Das bedeutet zusätzlich eine Steigerung der Prozess-/Fertigungssicherheit beim Trenchprozeß, insbesondere beim Flachtrenchprozeß.

Der mikromechanische Beschleunigungssensor nach dieser Ausführungsform wird vorzugsweise durch Silizium-Oberflächenmikromechanik hergestellt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Geometrie der Schwungmasse sowie der Biegefederanordnung und der Elektroden nicht auf die gezeigten Beispiele beschränkt. Allerdings sollten größere Abweichungen von der symmetrischen Form dann vermieden werden, wenn die Gefahr besteht, daß lineare Anteile der externen Beschleunigung das Meßergebnis verfälschen.

Dieses Herstellungsverfahrens ist ebenfalls nur als Beispiel zu verstehen, und andere Verfahren, wie z.B. galvanische Verfahren, können ebenfalls zu Herstellung des Beschleunigungssensors verwendet werden.

## Patentansprüche

1. Mikromechanische Struktur für einen Beschleunigungssensor, mit:
- einem Substrat (1), welches eine Verankerungseinrichtung aufweist; und
- einer Schwungmasse (5), die über eine Biegefedereinrichtung (4a-d) mit der Verankerungseinrichtung verbunden ist, so daß die Schwungmasse (5) elastisch aus ihrer Ruhelage auslenkbar ist,
wobei die Schwungmasse (5) im wesentlichen bzgl. ihrer Längsachse (L) spiegelsymmetrisch ist **dadurch gekennzeichnet, daß** sich die Schwungmasse (5) ausgehend von der Längsmitte (M) zu den Längsenden hin gleichmäßig verschmälert, and dass die Schwungmasse (5) optionellerweise an den beiden Längsenden eine Verbreiterung (5a, 5b) aufweist, woran die Biegefedereinrichtung (4a-d) angebracht ist

2. Mikromechanische Struktur nach Anspruch 1, **dadurch gekennzeichnet, dass** seitlich an der Schwungmasse (5) Elektroden (10a-f) angebracht sind, welche zusammen damit beweglich sind, und wobei die Länge der Elektroden (10a-f) sich ausgehend von der Längsmitte (M) zu den Längsenden hin vergrößert.

3. Mikromechanische Struktur nach Anspruch 2, **dadurch gekennzeichnet, daß** die Länge der Elektroden (10a-f) derart vorgesehen ist, daß der Abstand der von der Schwungmasse (5) abgewandten Enden der Elektroden (10a-f) von der Längsachse (L) konstant ist.

4. Mikromechanische Struktur nach einem der vorhergehenden Ansprüche, **dadurch gekennzeichnet, daß** die Verbreiterungen (5a, 5b) an den Längsenden stufenförmig ausgebildet ist.

## Claims

1. Micromechanical structure for an acceleration sensor, said structure having:
- a substrate (1) which has an anchoring device; and
- a flywheel mass (5) which is connected to the anchoring device via a flexion spring device (4a-d), with the result that the flywheel mass (5) can be elastically deflected from its position of rest, the flywheel mass (5) being essentially mirror-symmetrical with respect to its longitudinal axis (L),
**characterized in that** the flywheel mass (5) narrows uniformly from the longitudinal centre (M) to the longitudinal ends, and **in that** the flywheel mass (5) optionally has a widened section (5a, 5b) at the two longitudinal ends, the flexion spring device (4a-d) being fitted to said widened section.

2. Micromechanical structure according to Claim 1, **characterized in that** electrodes (10a-f) which can be moved together with the flywheel mass (5) are fitted to the sides of the flywheel mass (5), the length of the electrodes (10a-f) increasing from the longitudinal centre (M) to the longitudinal ends.

3. Micromechanical structure according to Claim 2, **characterized in that** the length of the electrodes (10a-f) is such that the distance between those ends of the electrodes (10a-f) which are remote from the flywheel mass (5) and the longitudinal axis (L) is constant.

4. Micromechanical structure according to one of the preceding claims, **characterized in that** the widened sections (5a, 5b) are stepped at the longitudinal ends.

## Revendications

1. Structure micromécanique pour un capteur d'accélération comprenant:
- un substrat (1) muni d'une installation d'ancrage, et
- une masse oscillante (5) reliée à l'installation d'ancrage par une installation de ressorts de flexion (4a-d), de façon que la masse oscillante (5) puisse être déviée élastiquement par rapport à sa position de repos,
- la masse oscillante (5) étant pratiquement symétrique plane par rapport à son axe longitudinal (L),
**caractérisée en ce que**
la masse oscillante (5) se réduit de façon régulière en partant du milieu longitudinal (M) vers les extrémités longitudinales, et
la masse oscillante (5) comporte en option un élargissement (5a, 5b) aux deux extrémités longitudinales, et l'installation de ressorts de flexion (5a-d) est prévue sur cet élargissement.

2. Structure micromécanique selon la revendication 1,
**caractérisée en ce que**
des électrodes (10a-f) sont prévues latéralement sur la masse oscillante (5) en étant mobiles avec celle-ci, et
la longueur des électrodes (10a-f) partant du milieu longitudinal (M) augmente vers les extrémités longitudinales.

3. Structure micromécanique selon la revendication 2,
**caractérisée en ce que**
la longueur des électrodes (10a-f) est telle que la distance des extrémités des électrodes (10a-f) non tournées vers la masse oscillante (5) par rapport à l'axe longitudinal (L) soit constante.

4. Structure micromécanique selon les revendications précédentes,
**caractérisée en ce que**
les élargissements (5a-b) aux extrémités longitudinales sont en forme de gradins.
